Europäisches Patentamt

European Patent Office

Office européen des brevets

(19)

(11) Publication number: **0 253 401 B1**

(12) **EUROPEAN PATENT SPECIFICATION**

(45) Date of publication of patent specification: **21.11.91**  (51) Int. Cl.⁵: **G11B 7/24, B41M 5/24**

(21) Application number: **87110343.8**

(22) Date of filing: **17.07.87**

(54) **Optical recording disc.**

(30) Priority: **18.07.86 JP 168018/86**
            **19.09.86 JP 219748/86**

(43) Date of publication of application:
    **20.01.88 Bulletin 88/03**

(45) Publication of the grant of the patent:
    **21.11.91 Bulletin 91/47**

(84) Designated Contracting States:
    **DE FR**

(56) References cited:
    **EP-A- 0 084 729**
    **EP-A- 0 150 829**

(73) Proprietor: **Hitachi Maxell Ltd.**
    **No 1-1-88, Ushitora Ibaraki-shi**
    **Osaka-fu(JP)**

(72) Inventor: **Gotoh, Akira**
    **7-7-30-201, Togashira**
    **Toride-shi Ibaragi-ken(JP)**
    Inventor: **Shimizu, Mitsuru**
    **3-34-3-204, Togashira**
    **Toride-shi Ibaragi-ken(JP)**
    Inventor: **Yamazaki, Katsunobu**
    **1-2-2-302, Togashira**
    **Toride-shi Ibaragi-ken(JP)**
    Inventor: **Kokai, Fumio**
    **754, California Avenue**
    **Palo Alto, CA 94306(US)**

(74) Representative: **von Kreisler, Alek,**
    **Dipl.-Chem. et al**
    **Deichmannhaus am Hauptbahnhof**
    **W-5000 Köln 1(DE)**

## Description

The present invention relates to an optical disc for recording and reproducing information by radiating a light beam.

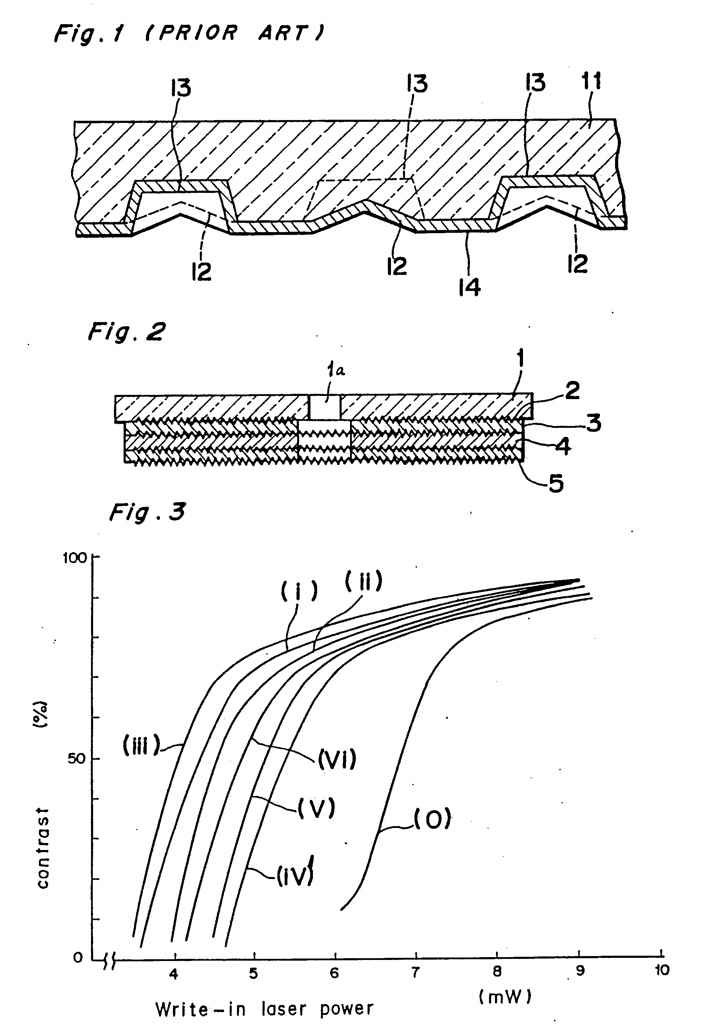

A conventional optical disc is shown in Fig. 1 in which a disc substrate is 11 has its one recording surface formed with pregrooves 12 for recording tracking signals and prepits 13 for recording address signals. Each of the pregrooves 12 and prepits 13 is covered with recording layer 14 made of heat mode recording material. The prepits 13 are respectively formed on the pregrooves 12 so that the signals cab be read corresponding to the difference of the depth of the prepits 13 and pregrooves 12.

In order to record information in the optical disc mentioned above, a tracking laser light beam is scanned along the pregrooves 12 and prepits 13 from the disc substrate side and the intensity of light reflected from the recording layer 14 is measured so as to detect the tracking information and address information. Furthermore, recording laser light beam modulated by a predetermined information signal is scanned on predetermined tracks and sectors to cause thermal change such as melt, evaporation and shrinkage of the recording layer 14 to record the information in a bit string of pits. When reading out the information recorded on the optical disc, a reproducing laser light beam is scanned along the pregrooves 12 from the disc substrate side, intensity of light reflected from the recording layer 14 is measured so that the tracking information and address information are detected, thereby to reproduce the recorded information signal.

As the disc substrate material for the optical disc, there have been mainly used polymer material such as PMMA (polymethyl methacrylate), PC (poly carbonate), epoxy resin.

However, as the thermal resistivity of the high polymer material mentioned above is relatively low, repetition of radiation of the laser beam to the optical disc for the reproduction of the information causes the pregroove 12 and the prepit 13 to be gradually deformed. Therefore, there has been recently pointed out of degradation of the contrast of the light reflected from the pregroove 12 and prepit 13, which causes the S/N ratio to be lowered.

Conventionally, in order to record with a high S/N ratio preventing the disturbance of the shape of the prepits and projections of the optical disc near the recording pits by preventing the thermal deformation of the optical disc substrate, there is disclosed in Japanese Patent laid open (unexamined) 57-189356 to provide a adiabatic layer having low thermal conductivity and high adiabatic property in addition to a thermal resistivity higher than the recording temperature such as CuSe or $As_2Se_3$ including more than 40 atomic % of Se, or S between the disc substrate 11 and a recording layer 14.

EP-A-84 729 relates to a recording medium being suitable for writing and reading out information by irradiating a photobeam on a recording layer at a relatively low power comprising a light transmissible substrate, a light transmissible subbing layer being composed of any radiation transmissible inorganic material having a melting point higher than that of the metal of the metal layers, and the recording layer. The recording layer is composed of:

i) a sublimable organic substance layer laminated on the subbing layer and

ii) a metal layer laminated on the organic layer in one embodiment.

According to the study by the present inventors, there has been found that superiority and inferiority of an under layer of the recording layer 14 has an important effect to the superiority and inferiority of a recording property and the thermal deformation of the recording layer 14 is promoted by the thermal deformation of the under layer such as disc substrate 11, namely if the under layer is never thermally deformed, the recording sensitivity of the recording layer 14 is remarkably lowered.

In case, for example, a recording layer is formed on the under layer made of glass, the recording sensitivity is remarkably lowered compared to such a case that the recording layer is directly formed on a substrate made of PMMA material.

Accordingly, in case the adiabatic layer which is not thermally deformed is formed between the disc substrate 11 and the recording layer l4 as proposed by the prior art of Japanese patent publication mentioned above, the recording sensitivity is much lowered, although the S/N ratio and the thermal deformation of the prepits and the pregrooves can be improved. This means that according to the prior art, it is necessary to increase the recording power.

In order to increase the recording sensitivity keeping the pattern of the prepits and pregrooves on the disc substrate undeformed under the repetition of the reproducing laser light scanning on the optical disc, it is necessary not only to form a layer on the disc substrate to which the recording information is transferred by a high thermal resistive material so as to prevent the thermal deformation of the prepits and the pregrooves under repetition of the laser light beam scan but also to provide an additional layer which is meltable or solvable at a temperature lower than the melting point of the recording layer on the side to

2

which the laser light beam is radiated.

An essential object of the present invention is to provide an optical disc which is able to record information with a high recording sensitivity and a high S/N ratio.

Another object of the present invention is to provide an optical disc which is able to record and reproduce without change of the S/N ratio under repetition of the laser light beam scan.

According to the present invention, there is provided an optical recording disc comprising;

a light permeable disc substrate (1),

a light permeable adiabatic layer (3) formed on one side surface of said disc substrate (1),

a triggering layer (4) formed on said adiabatic layer (3) and

a recording layer (5) formed on said triggering layer (4)

characterized in that

said adiabatic layer (3) is made of an organic material being thermally deformable at a temperature higher than that of the substrate (1) and having a thermal conductivity lower than 33.5 kJ/mh$^\circ$C (8 kcal/m h cc), and

said triggering layer (4) is made of a material having a melting point solving point or decomposition point at a temperature lower than the melting point or decomposition point of the recording layer (5)

Fig. 1 is a cross sectional view showing an example of a pregrooves and prepits used in a conventional optical disc,

Fig. 2 is a cross sectional view showing a preferred embodiment of an optical disc according to the present invention,

Fig. 3 shows graphs of recording property of various examples of the optical disc according to the present invention and conventional optical disc with the vertical axis taken for contrast ratio and the horizontal axis taken for write-in laser power, wherein the curves (i) to (vi) represent the first to sixth examples of the optical disc according to the present invention and (0) represents the conventional optical disc,

Fig. 4 is a cross sectional view of another embodiment of the optical disc according to the present invention,

Fig. 5 is a cross sectional view of a further embodiment of the optical disc according to the present invention, and

Fig. 6 is a cross sectional view of a still further embodiment of the optical disc according to the present invention.

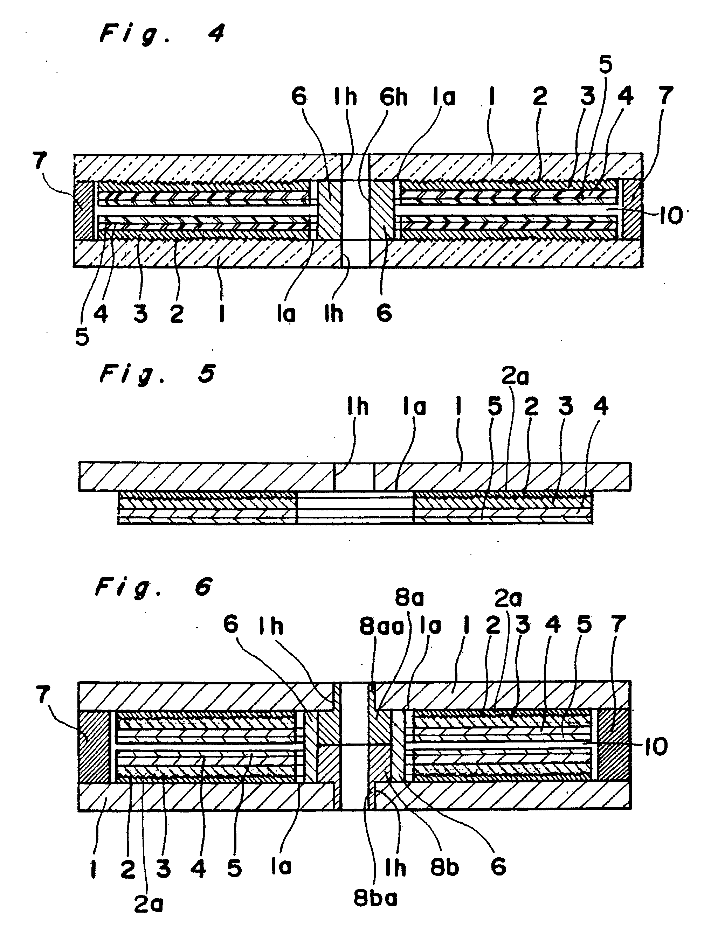

Referring to Fig. 2 showing a general structure of an optical disc according to the present invention, there are shown a disc substrate 1, a replicated pattern 2 formed on the disc substrate 1, a adiabatic layer 3 formed on the disc substrate 1, a triggering layer 4 formed on the adiabatic layer 3 and a recording layer 5 formed on the triggering layer 4.

The disc substrate 1 is made of a plastic resin material such as PMMA, PC, polyvinyl chloride, polypropylen, acrylic resin, epoxy resin or the like and is shaped into a round disc shape of a predetermined diameter with a through hole 1a penetrated at the center position of the disc. There is transferred the replicated pattern 2 containing the pregrooves of the tracking information and the prepits of the address signal on one side of the disc substrate 1. The disc substrate 1 may be produced using various ways depending on the material thereof. For examples, in case the disc substrate 1 is made of PMMA or PC, an injection molding may be used. In case the disc substrate 1 is made of epoxy resin, casting may be used.

The recording layer 5 preferably may be made of low melting metal such as Te or alloy containing Te as a main composition. As the production methods of the recording layer 5, there may be used various known thin film technique such as vacuum deposition, sputtering, electron beam method or plasma polyerization method.

The adiabatic layer 3 is made of light permeable organic material having a high thermal resistivity superior to the thermal resistivity of the disc substrate 1 and a low thermal conductivity. In considering noise caused by the optical system and the S/N ratio of the recording and reproducing device, it is desired to make the reproducing laser power to be high, therefore, for example, in case a semiconductor laser of 20 mW (mili watt) with 830 nm (nano meters) wave length is used, more than 1 mW (mili watt) of the recording power is needed at the recording surface. In order to prevent the thermal deformation of the pregrooves and prepits even in case of repetition of the laser beam scanning on the optical disc with such laser power mentioned above, it is necessary to use the adiabatic layer 3 having the thermal resistivity higher than 110$^\circ$C. In addition, the lower the thermal conductivity of the adiabatic layer 3, the higher the recording sensitivity, so that in order to obtain a practically available recording sensitivity using a 20 mW (mili watts) laser power (less than 9 mW of the laser power on the recording layer surface), the thermal conductivity of the adiabatic layer 3 must be less than 33.5 kJ/mh$^\circ$C (8 Kcal/m.h.$^\circ$C). Although the adiabatic layer 3 may be formed with any thickness, it is proper that the layer is practically formed with an extent of 10 to 100 nm (100 to 1000 Å) thick.

Specifically, in case the disc substrate 1 is a transparent glass substrate on the lower surface of which a transparent replica layer is fixed or the disc substrate 1 is made of PMMA, PC, epoxy resin, polyolefin or ultraviolet hardening resin (UV resin) and the recording layer 5 is made of the low melting metal containing Te as the main component, the adiabatic layer 3 may be made of at least one sort of organic material selected from polyimide and polyamideimide. Furthermore, the triggering layer 4 may be made of an organic material having a purine derivative as a nucleus, an organic compound containing fluorine, a silicon organic compound and a hydrocarbon polymer.

The above-mentioned organic materials having purine derivative as the nucleus include guanine, adenine, guanosine, xanthine, uric acid, caffeine, theophylline and para-xanthine are available.

The above-mentioned organic materials containing fluorine include fluorinated polyolefin such as polytetrafluoroethylene (PTFE), polyvinyl fluoride, polytrifluoroethylene, polyvinylidene fluoride and polyhexafluoropropylene; halogenated polyfluoroolefin such as polychlorotrifluoroethylene and graphite fluoride such as polycarbon monofluoride polydichlorodifluoroethylene; and polydicarbon monofluoride; and plasma polymer of a monomer such as carbon tetrafluoride, tetraphloroethylene, hexaphloropropene and hexaphloroethane.

The above-mentioned organic materials containing silicon include plasma polymer of an organic silicon compound such as tetramethylsilane, hexamethyldisilane, hexamethyldisilazane, hexamethylsiloxane and octamethylcyclotetrasiloxane.

The above-mentioned hydrocarbon organic materials include plasma polymer of a hydrocarbon such as methane, propane, ethylene, propylene, acetylene, benzene and styrene. The trigger layer 4 preferbly may be made of at least one sort of organic material selected from a group consisting of polytetrafluoroethylene, nitrocellulose, guanine, or plasma polymerization of at least one organic material selected from methane, propane, ethylene, propylene, acetylene, benzene, styrene, tetramethylsilane, hexamethyldisilane, hexamethyldisilazane, hexamethylsiloxane, octamethylcyclotetrasiloxane, tetramethyltin, tetramethylgermanium, ferrocene, pentaethoxytantalum, titanium tetraisopropoxide, carbon tetrafluoride, tetrafluoroethylene, hexafluoropropene and hexafluoroethane, benzene monomar and hexamethyldisilaznemonomar in particular in the case that the recording layer is made of Te or a low melting point metal mainly containing Te. The triggering layer is formed with more than 15 nm (150 Å) less than 100 nm (1000 Å) thick. As the production method of the adiabatic layer 3, the sputtering is excellent. As the production method of the trigger layer 4, there may be used sputtering, vacuum deposition, spin coat method and plasma polymerization.

Table 1 shows the respective kinds of material available for the production of the disc substrate, recording layer, adiabatic layer and triggering layer with their melting point or decomposition temperature, thermal deformation temperature and thermal conductivity.

## Table 1

| material | melting point decomp. temp. (°C) | deformation temp. (°C) | thermal conductivity (Kcal/mh°C) kJ / mh°C |
|---|---|---|---|
| Te | 449.8 | | (2.74) 11.46 |
| PMMA | 110 | ~ 90 | (0.17) 0.71 ~ |
| PC | 220 | ~ 120 | (0.17) 0.71 |
| epoxy | ~325 | ~ 130 | (0.15 ~ 1.2) 0.62 ~ 5.02 |
| ZnS | >1180 | | (1.89) 7.91 |
| ZrO₂ | 2700 | | (1.54) 6.44 |
| SiO | >1700 | | (1.29) 5.39 |
| SiO₂ | 2230 | | (1.18) 4.94 |
| TiO₂ | 1640 | | (7.20) 30.13 |
| MgF₂ | 1260 | | |
| polyimide | > 400 | >400 | (0.15) 0.62 |
| polyamide imide | | 274 ~ 297 | (0.2 ~ 0.3) 0.84 ~ 1.25 |
| PTFE | 400 | | (0.28) 1.17 |
| N.C. | 180 | | |
| guanine | 365 | | |

PTFE means polytetrafluoroethylene.

N.C. means nitro cellulose.

decomp. means decomposition.

EXAMPLES

A number of examples 2 of the optical disc is hereinafter described.

Thirteen examples were prepared using the material for the adiabatic layer and material for the triggering layer as listed in the table 2. In the examples, the disc substrates of the respective examples were made of PC by injection molding. The recording layers of the respective examples were made by sputtered TeSe alloy with 30 nm (300 Å) thickness.

## Table 2

| example | adiabatic layer | triggering layer |
|---------|-----------------|------------------|
| 1* | $SiO_2$ | polytetrafluoroethylene |
| 2* | $SiO_2$ | guanine |
| 3* | $SiO_2$ | nitro cellulose |
| 4* | $SiO_2$ | methane plasma polymerized layer |
| 5* | $SiO_2$ | benzene plasma polymerized layer |
| 6* | $SiO_2$ | hexadimethyldisilazane plasma polymerized layer |
| 7* | $SiO_2$ | polytetrafluoroethylene |
| 8* | $ZrO_2$ | polytetrafluoroethylene |
| 9* | ZnS | polytetrafluoroethylene |
| 10* | $TiO_2$ | polytetrafluoroethylene |
| 11* | $MgF_2$ | polytetrafluoroethylene |
| 12 | polyimide | polytetrafluoroethylene |
| 13 | polyamideimide | polytetrafluoroethylene |

* comparative examples

Example 1 (comparative)

The adiabatic layer 3 of $SiO_2$ was formed using a sputtering method with 30 nm (300 Å) thick on one side surface of the disc substrate 1 made of PC using an injection molding. The sputtering condition was 0.26 Pa ($2 \times 10^{-3}$ Torr) of Argon gas pressure with 200 watts of the discharge power. Subsequently, the triggering layer 4 made of polytetrafluoroethylene was formed on the adiabatic layer 3 using sputtering method with 20 nm (200 Å) thick. The sputtering condition was 0.66 Pa ($5 \times 10^{-3}$ Torr) of Argon gas pressure with 60 watts of the discharge power. Subsequently, the recording layer 5 made of TeSe alloy was formed on the triggering layer 4 using sputtering. The sputtering condition was 0.66 Pa ($5 \times 10^{-3}$ Torr) of Argon pressure with 40 watts of the discharge power.

Example 2 (comparative)

The adiabatic layer 3 of $SiO_2$ was formed on one side surface of the disc substrate 1 in the same condition as used in the example 1, subsequently the triggering layer 4 of guanine was formed on the $SiO_2$ adiabatic layer 3 using vacuum deposition with about 20 nm (200 Å) thick. The vacuum deposition was performed using resistance heating method under $1.06 \times 10^{-3}$ Pa ($8 \times 10^{-6}$ Torr) vacuum. The recording layer was formed with 30 nm (300 Å) thick in the same condition as that of the example 1.

Example 3 (comparative)

6

The adiabatic layer 3 of $SiO_2$ was formed on one side surface of the disc substrate 1 in the same condition as used in the example 1, subsequently the triggering layer 4 of nitrocellulose was formed on the $SiO_2$ adiabatic layer 3 using a spin coating method with about 100 nm (1,000 Å) thick. The number of rotation of the disc substrate 1 was 900 rpm. The recording layer was formed on the triggering layer 4 with 30 nm (300 Å) thick in the same condition as that of the example 1.

Example 4 (comparative)

The adiabatic layer 3 of $SiO_2$ was formed on one side surface of the disc substrate 1 in the same condition as used in the example 1, subsequently the triggering layer of methane was formed on the $SiO_2$ adiabatic layer 3 using the plasma polymerization with about 20 nm (200 Å) thick. The deposition was performed using methane gas as the discharge gas under 26.6 Pa (0.2 Torr) vacuum with the discharge power of 80 watts. The recording layer 5 was formed on the triggering layer 4 with 30 nm (300 Å) thick in the same condition as that of the example 1.

Example 5 (comparative)

The adiabatic layer 3 of $SiO_2$ was formed on one side surface of the disc substrate 1 in the same condition as used in the example 1, subsequently the triggering layer of benzene was formed on the $SiO_2$ adiabatic layer 3 using the plasma polymerization with about 20 nm (200 Å) thick. The deposition was performed using benzene monomar as the discharge gas under 20 Pa (0.15 Torr) vacuum with 100 watts of discharge power. Subsequently the recording layer 5 was formed on the triggering layer 4 with 30 nm (300 Å) thick in the same condition of the example 1.

Example 6 (comparative)

The adiabatic layer 3 of $SiO_2$ was formed on one side surface of the disc substrate 1 in the same condition as used in the example 1, subsequently the triggering layer 4 of hexamethyldisilazane monomar was formed on the $SiO_2$ adiabatic layer 3 using plasma polymerization with about 20 nm (200 Å) thick. The deposition was performed using hexamethyldisilazane monomar as the discharge gas under 1.33 Pa (0.01 Torr) vacuum with 140 watts discharge power. The recording layer was formed on the triggering layer 4 with 30 nm (300 Å) thick in the same condition as that of the example 1.

Example 7 (comparative)

The adiabatic layer 3 of SiO was formed using sputtering method with 30 nm (300 Å) thick on one side surface of the disc substrate 1 of PC made by injection molding. The condition of the sputtering was 2.66 Pa ($2 \times 10^{-2}$ Torr) of argon gas pressure with 200 watts of the discharge power. Subsequently, the triggering layer 4 made of polytetrafluoroethylene and the recording layer 5 of TeSe were formed in turn on the adiabatic layer 3 in the same manner as those in the example 1.

Example 8 (comparative)

The adiabatic layer 3 of $ZrO_2$ was formed using sputtering method with 30 nm (300 Å) thick on one side surface of the disc substrate 1 of PC made by injection molding. The condition of the sputtering was 0.26 Pa ($2 \times 10^{-3}$ Torr) of argon gas pressure with 200 watts of the discharge power. Subsequently, the triggering layer 4 made of polytetrafluoroethylene and the recording layer 5 of TeSe were formed in turn on the adiabatic layer 3 in the same manner as those in the example 1.

Example 9 (comparative)

The adiabatic layer 3 Of ZnS was formed using sputtering method with 30 nm (300 Å) thick on one side surface of the disc substrate 1 of PC made by injection molding. The condition of the sputtering was 2.66 Pa ($2 \times 10^{-2}$ Torr) of argon gas pressure with 200 watts of the discharge power. Subsequently, the triggering layer 4 made of polytetrafluoroethylene and the recording layer 5 of TeSe were formed in turn on the adiabatic layer 3 in the same manner as those in the example 1.

Example 10 (comparative)

The adiabatic layer 3 of TiO$_2$ was formed using sputtering method with 30 nm (300 Å) thick on one side surface of the disc substrate 1 of PC made by injection molding. The condition of the sputtering was 0.26 Pa (2 x 10$^{-3}$ Torr) of argon gas pressure with 300 watts of the discharge power. Subsequently, the triggering layer 4 of polytetrafluoroethylene and the recording layer 5 of TeSe were formed in turn on the adiabatic layer 3 in the same manner as those in the example 1.

Example 11 (comparative)

The adiabatic 3 of MgF$_2$ was formed using sputtering method with 30 nm (300 Å) thick on one side surface of the disc substrate 1 of PC made by injection molding. The condition of the sputtering was 0.66 Pa (5 x 10$^{-3}$ Torr) of argon gas pressure with 150 watts of the discharge power. Subsequently, the triggering layer 4 of polytetrafluoroethylene and the recording layer 5 of TeSe were formed in turn on the adiabatic layer 3 in the same manner as those in the example 1.

Example 12

The adiabatic layer 3 of polyimide was formed using sputtering method with 30 nm (300 Å) thick on one side surface of the disc substrate 1 of PC made by injection molding. The condition of the sputtering was 0.66 Pa (5 x 10$^{-3}$ Torr) of argon gas pressure with 140 watts of the discharge power. Subsequently, the triggering layer 4 made of polytetrafluoroethylene and the recording layer 5 of TeSe were formed on the adiabatic layer 3 in the same manner as those in the example 1.

Example 13

The adiabatic layer 3 of polyamideimide was formed using sputtering method with 30 nm (300 Å) thick on one side surface of the disc substrate 1 of PC made by injection molding. The condition of the sputtering was 0.66 Pa (5 x 10$^{-3}$ Torr) of argon gas pressure with 130 watts of the discharge power. Subsequently, the triggering layer 4 of polytetrafluoroethylene and the recording layer 5 of TeSe were formed in turn on the adiabatic layer 3 in the same manner as those in the example 1.

There are shown in the table 3 the maximum laser powers of the examples 1 to 13 of the optical disc mentioned above under such a condition that the fluctuation of the output signal amplitude from the prepits on the optical disc is less than ± 10% in case of continuous reproduction for 10 hours. Comparison is made with the conventional optical disc which is not provided with the adiabatic layer 3. The tests were made with the wave length of the reproducing leaser light beam of 830 nm (nano meters).

## Table 3

| examples | maximum laser power (mW) |
|---|---|
| 1 | 1.5 |
| 2 | 1.7 |
| 3 | 1.7 |
| 4 | 1.8 |
| 5 | 1.7 |
| 6 | 1.5 |
| 7 | 1.5 |
| 8 | 1.5 |
| 9 | 1.5 |
| 10 | 1.7 |
| 11 | 1.5 |
| 12 | 1.3 |
| 13 | 1.2 |

As shown in the table 3, the optical discs in the respective examples have the laser output power more than 1.0 mW under such a condition that the fluctuation of the output signal amplitude is within ± 10% for 10 hours continuous reproduction, therefore, it can be appreciated that the optical disc according to the present invention is available to reproduce with more than 1.0 mW which is needed in actual use for the reproduction with the good S/N ratio.

In the various combinations of the adiabatic layer and the triggering layer in the examples mentioned above, the combination of the $SiO_2$ adiabatic layer and triggering layer made of methane plasma polymerization (example 4) is most superior in terms of the thermal resistivity. The respective combinations of $SiO_2$ adiabatic layer and guanine triggering layer (example 2), $SiO_2$ adiabatic layer and nitrocellulose triggering layer (example 3) and $TiO_2$ adiabatic layer and polytetrafluoroethylene triggering layer (example 10) are superior in terms of the thermal resistivity.

Comparison between the contrast ratio of the examples 1 to 6 and that of the conventional optical disc without the adiabatic layer 3 and triggering layer 4 is shown in Fig. 3. The wave length of the recording laser beam was 830 nano meters and the optical disc was rotated 1200 rpm. In the graphs shown in Fig. 3, the horizontal axis represents the recording laser power on the optical disc and the vertical axis represents the contrast ratio. The wording of the contrast ratio means the easiness of formation of the pit and is represented by (A-X)/(A-B), wherein A is a reflection factor of the laser light at a point where the pit is not formed and B is reflection factor of the laser light at a point where the recording layer is not formed and X is a reflection factor of the laser light of the pit formed by the radiation of the laser light.

As apparent from the graphs shown in Fig. 3, the optical disc according to the present invention having the adiabatic layer 3 and triggering layer 4 attains a large contrast ratio for a predetermined laser power, whereby the pits can easily be formed compared to the conventional optical disc without the adiabatic layer 3 and the triggering layer 4. The optical disc of the example 3 having $SiO_2$ adiabatic layer 3 and nitorcellulose triggering layer 4 attains the highest contrast ratio for a predetermined laser power. Also, it can be found that the pits can be easily formed in the order of the combination of $SiO_2$ adiabatic layer 3

and polytetrafluoroethylene triggering layer 4 (example 1), combination of $SiO_2$ adiabatic layer 3 and guanine triggering layer 4 (example 2), combination of $SiO_2$ adiabatic layer 3 and hexamethyldisilazanepolymer triggering layer 4 (example 6), combination of $SiO_2$ adiabatic layer 3 and benzene polymer triggering layer 4 (example 5) and the combination of the $SiO_2$ adiabatic layer 3 and methane plasma polymerization triggering layer (example 4).

The essential structure of the optical disc according to the present invention is to provide the adiabatic layer 3 with a high thermal resistivity material having a thermal deformation temperature higher than the thermal deformation temperature of the disc substrate 1 on the side of the disc substrate where the prepits and the pregrooves are formed and to provide the triggering layer 4 with a light permeable material having a melting or solving point lower than that of the recording layer 5 on the side where the prepits and the pregrooves are formed, therefore, the material used in the adiabatic layer and triggering layer is not limited to the examples mentioned above and may be selected as desired.

Although the present invention is explained with respect to the various examples of single sided optical disc mentioned above, the present invention can be applied to various types of the optical disc, for examples, such as dual sided optical disc as shown in Fig. 4 and Fig. 6 in which like parts shown in Fig. 2 are designated by like reference numerals.

Fig. 4 shows dual sided optical disc in which a pair of single sided optical disc made by assembling the arrangement shown in Fig. 2 are bonded together through an inner spacer 6 and an outer spacer 7 so that the recording layers 5 face each other forming an air gap 10. The inner spacer 6 is bonded on the inner rim portion of the disc substrate 1, and a center hole 6h having the same inner diameter as the inner diameter of the center hole 1h is formed in the center portion of the inner spacer 6.

The disc substrate 1 is made of transparent material such as glass or the like.

Fig. 5 shows a further example of the optical disc according to the present invention in which a replica layer 2a made of ultraviolet lay hardening material is formed between the disc substrate 1 and the adiabatic layer 3.

Fig. 6 shows a further example of the optical disc according to the present invention in which a pair of the arrangements shown in Fig. 5 are assembled to form a dual sided optical disc. In the inner spacer 6, a pair of hub halves 8a and 8b are engaged in the inner spacer 6 with respective stepped cylindrical portion 8aa and 8ba fitted in the center hole 1h of the respective disc substrate 1.

## Claims

1. An optical recording disc comprising:
   a light permeable disc substrate (1),
   a light permeable adiabatic layer (3) formed on one side surface of said disc substrate (1),
   a triggering layer (4) formed on said adiabatic layer (3) and
   a recording layer (5) formed on said triggering layer (4)
   characterized in that
   said adiabatic layer (3) is made of an organic material being thermally deformable at a temperature higher than that of the substrate (1) and having a thermal conductivity lower than 33.5 kJ/mh $^\circ$C (8 kcal/m h $^\circ$C), and
   said triggering layer (4) is made of a material having a melting point, solving point or decomposition point at a temperature lower than the melting point or decomposition point of the recording layer (5).

2. The optical recording disc according to claim 1, wherein said adiabatic layer is made of material having a thermal resistivity higher than 110 $^\circ$C.

3. The optical recording disc according to claim 1, wherein said disc substrate is made of PMMA, PC, polyolefin, UV resin or epoxy resin and the adiabatic layer is made of at least one sort of organic material selected from polyimide and polyamideimide.

4. The optical recording disc according to claim 1, wherein said recording disc is made of Te or a low melting point metal mainly containing Te and said triggering layer is made of nitrocellulose, polytetrafluoroethylene, guanine or plasma polymerized material having hydrocarbon, benzenemonomar, hexamethyldisilazanemonomar as a vapor source.

5. The optical recording disc according to claim 1, wherein said triggering layer is made of at least one sort of organic material selected from room-temperature solid material mainly containing organic compound having purine derivative as the nucleus and fluoride organic compound.

6. The optical recording disc according to claims 1 to 5, wherein said recording disc is made of transparent glass substrate, on the lower surface of which transparent replica layer is fixed and at least the triggering layer (or both said adiabatic layer and said triggering layer) is formed on said replica layer and said recording layer is formed on the triggering layer.

7. The optical recording disc according to claims 1 to 3, wherein said disc substrate is made of polymethylmethacrylate, polycarbonate, polyolefin, UV resin or epoxy resin, and said recording layer is made of alloy mainly containing Te, and said triggering layer is made of at least one sort of plasma-polymerized organic material selected from a group consisting of propane, ethylene, propylene, acetylene, benzene, styrene, tetramethylsilane, hexamethyldisilane, hexamethyldisilazane, hexamethylsiloxane, octamethylcyclotetrasiloxane, tetramethyltin, tetramethylgermanium, ferrocene, pentaethoxytantalum, titanium tetraisopropoxide, carbon tetrafluoride, tetrafluoroethylene, hexafluoropropene and hexafluoroethane.

8. The optical recording disc according to claims 1 to 4, wherein said triggering layer is formed with more than 15 nm (150 Å) less than 100 nm (1000 Å) thick.

9. A method of the production of an optical recording disc defined in claim 1 comprising;
   a step of producing the adiabatic layer by sputtering,
   a step of producing the triggering layer by plasma polymerization and
   a step of producing the recording layer by sputtering, the respective steps being performed in the order consecutively.

10. A method of the production of an optical recording disc defined in claim 1, characterized in that the adiabatic layer, the triggering layer and the recording layer are respectively formed by sputtering consecutively in the order.

**Revendications**

1. Un disque d'enregistrement optique comprenant :
   un support de disque (1) perméable à la lumière,
   une couche adiabatique (3) perméable à la lumière formée sur une face dudit support de disque (1),
   une couche de déclenchement (4) formée sur ladite couche adiabatique (3) et
   une couche d'enregistrement (5) formée sur ladite couche de déclenchement (4),
   caractérisé en ce que
   ladite couche adiabatique (3) est faite d'une matière organique qui est déformable thermiquement à une température supérieure à celle du support (1) et ayant une conductivité thermique inférieure à 33,5 kJ/m.h.°C (8 kcal/m.h.°C) ; et
   ladite couche de déclenchement (4) est faite d'une matière ayant un point de fusion, un point de dissolution ou un point de décomposition à une température inférieure au point de fusion ou de décomposition de la couche d'enregistrement (5).

2. Le disque d'enregistrement optique selon la revendication 1, dans lequel ladite couche adiabatique est faite d'une matière ayant une résistance thermique supérieure à 110°C.

3. Le disque d'enregistrement optique selon la revendication 1, dans lequel ledit support de disque est fait de PMMA, de PC, de polyoléfine, de résine UV ou de résine époxy et la couche adiabatique est faite d'au moins une sorte de matière organique choisie parmi les polyimides et les polyamideimides.

4. Le disque d'enregistrement selon la revendication 1, dans lequel ledit disque d'enregistrement est fait de Te ou d'un métal de bas poids de fusion contenant principalement Te et ladite couche de déclenchement est faite de nitrocellulose, de polytétrafluoroéthylène, de guanine ou d'une matière polymérisée de plasma ayant un hydrocarbure, du benzène monomère, de l'hexaméthyldisilazane monomère comme source de vapeur.

11

5. Le disque d'enregistrement optique selon la revendication 1, dans lequel ladite couche de déclenchement est faite d'au moins une sorte de matière organique choisie parmi les matières solides à la température ambiante contenant principalement un composé organique ayant un noyau de dérivé de purine et un composé organique fluoré.

6. Le disque d'enregistrement optique selon les revendications 1 à 5, dans lequel ledit disque d'enregistrement est fait d'un support en verre transparent, sur la face inférieure duquel est fixée une couche de copie et au moins la couche de déclenchement (ou ladite couche adiabatique et ladite couche de déclenchement) est formée sur ladite couche de copie et ladite couche d'enregistrement est formée sur la couche de déclenchement.

7. Le disque d'enregistrement optique selon les revendications 1 à 3, dans lequel ledit support de disque est fait en polyméthacrylate de méthyle, en polycarbonate, en polyoléfine, en résine UV ou en résine époxy et ladite couche d'enregistrement est faite d'un alliage contenant principalement Te et ladite couche de déclenchement est faite d'au moins une sorte de matière organique polymérisée dans le plasma choisie parmi les suivantes : propane, éthylène, propylène, acétylène, benzène, styrène, tétraméthylsilane, hexaméthyldisilane, hexaméthyldisilazane, hexaméthylsiloxane, octaméthylcyclotétrasiloxane, tétraméthylétain, tétraméthylgermanium, ferrocène, pentaéthoxytantale, tétraisopropoxyde de titane, tétrafluorure de carbone, tétrafluoroéthylène, hexafluoropropène et hexafluoroéthane.

8. Le disque d'enregistrement optique selon les revendications 1 à 4, dans lequel ladite couche de déclenchement est formée à une épaisseur de plus de 15 nm (150 Å) et moins de 100 nm (1 000 Å).

9. Un procédé de production d'un disque d'enregistrement optique défini selon la revendication 1 comprendant :
une étape de production de la couche adiabatique par pulvérisation cathodique,
une étape de production de la couche de déclenchement par polymérisation dans le plasma et
une étape de production de la couche d'enregistrement par pulvérisation cathodique, les étapes respectives étant effectuées successivement dans cet ordre.

10. Un procédé de production d'un disque d'enregistrement optique défini à la revendication 1, caractérisé en ce que la couche adiabatique, la couche de déclenchement et la couche d'enregistrement sont formées respectivement par pulvérisation cathodique successivement dans cet ordre.

## Patentansprüche

1. Optische Aufzeichnungsplatte, umfassend
ein lichtdurchlässiges Substrat (1) in Form einer Platte,
eine lichtdurchlässige adiabatische Schicht (3), die auf einer seitlichen Oberfläche des plattenförmigen Substrats (1) gebildet ist,
eine triggernde Schicht (4), die auf der adiabatischen Schicht (3) gebildet ist, und
eine Aufzeichnungsschicht (5), die auf der triggernden Schicht (4) gebildet ist,
dadurch gekennzeichnet, daß
die adiabatische Schicht (3) aus einem organischen Material hergestellt ist, das bei einer höheren Temperatur als der des Substrats (1) verformbar ist und eine thermische Leitfähigkeit von weniger als 33,5 kJ/m•h•°c (8 kcal/m•h•°C) besitzt, und
daß die triggernde Schicht (4) aus einem Material mit einem Schmelzpunkt, Lösungspunkt oder Zersetzungspunkt bei einer Temperatur unterhalb des Schmelzpunktes oder Zersetzungspunktes der Aufzeichnungsschicht (5) besteht.

2. Optische Aufzeichnungsplatte nach Anspruch 1, worin die adiabatische Schicht aus einem Material mit einer thermischen Beständigkeit von mehr als 110 °C hergestellt ist.

3. Optische Aufzeichnungsplatte nach Anspruch 1, worin das Platten-Substrat aus PMMA, PC, Polyolefin, UV-Harz oder Epoxy-Harz hergestellt ist und die adiabatische Schicht aus wenigstens einer Sorte eines aus Polyamid und Polyamidimid ausgewählten organischen Materials hergestellt ist.

4. Optische Aufzeichnungsplatte nach Anspruch 1, worin die Aufzeichnungsplatte aus Te oder einem niedrigschmelzenden, hauptsächlich Te enthaltenden Metall hergestellt ist und die triggernde Schicht aus Nitrocellulose, Polytetrafluorethylen, Guanin oder einem mit einem Kohlenwasserstoff, Benzol-Monomer, Hexamethyldisilazan-Monomer als Dampf-Quelle plasma-polymerisierten Material hergestellt ist.

5. Optische Aufzeichnungsplatte nach Anspruch 1, worin die triggernde Schicht aus wenigstens einer Art eines organischen Materials hergestellt ist, das aus bei Raumtemperatur festem Material ausgewählt ist, das hauptsächlich eine organische Verbindung mit einem Purin-Derivat als Kern und eine organische Fluorid-Verbindung enthält.

6. Optische Aufzeichnungsplatte nach den Anspruchen 1 bis 5, worin die Aufzeichnungsplatte aus einem transparenten Glas-Substrat gefertigt ist, auf dessen unterer Oberfläche eine Abdruck-Schicht (Replika-Schicht) fixiert ist, und wenigstens die triggernde Schicht (oder sowohl die adiabatische Schicht als auch die triggernde Schicht) auf der Abdruck-Schicht gebildet ist(sind) und die Aufzeichnungsschicht auf der triggernden Schicht gebildet ist.

7. Optische Aufzeichnungsplatte nach den Ansprüchen 1 bis 3, worin das Platten-Substrat aus Polymethylmethacrylat, Polycarbonat, Polyolefin, UV-Harz oder Epoxy-Harz hergestellt ist und die Aufzeichnungsschicht aus einer hauptsächlich Te enthaltenden Legierung hergestellt ist und die triggernde Schicht aus wenigstens einer Art eines plasma-polymerisierten organischen Material hergestellt ist, das aus einer aus Propan, Ethylen, Propylen, Acetylen, Benzol, Styrol, Tetramethylsilan, Hexamethyldisilan, Hexamethyldisilazan, Hexamethylsiloxan, Octamethylcyclotetrasiloxan, Tetramethylzinn, Tetramethylgermanium, Ferrocen, Pentaethoxytantal, Titantetraisopropoxid, Kohlenstofftetrafluorid, Tetrafluorethylen, Hexafluorpropen und Hexafluorethan bestehenden Gruppe ausgewählt ist.

8. Optische Aufzeichnungsplatte nach den Ansprüchen 1 bis 4, worin die triggernde Schicht in einer Dicke von mehr als 15 nm (150 Å) und weniger als 100 nm (1000 Å) gebildet wird.

9. Verfahren zur Herstellung einer optischen Aufzeichnungsplatte nach Anspruch 1, umfassend
einen Schritt des Herstellens der adiabatischen Schicht durch Aufstäuben,
einen Schritt des Herstellens der triggernden Schicht durch Plasma-Polymerisation und
einen Schritt des Herstellens der Aufzeichnungsschicht durch Aufstäuben,
wobei die betreffenden Schritte nacheinander in der angegebenen Reihenfolge durchgeführt werden.

10. Verfahren zur Herstellung einer optischen Aufzeichnungsplatte nach Anspruch 1, dadurch gekennzeichnet, daß die adiabatische Schicht, die triggernde Schicht und die Aufzeichnungsschicht jeweils durch Aufstäuben nacheinander in der angegebenen Reihenfolge hergestellt werden.

Fig.1 (PRIOR ART)

Fig.2

Fig.3

contrast (%)

Write-in laser power (mW)

Fig. 4

Fig. 5

Fig. 6